# EUROPÄISCHE PATENTANMELDUNG

(11) **EP 3 677 877 A1**
(43) Veröffentlichungstag der Anmeldung: **08.07.2020**
(21) Anmeldenummer: 19150062.8
(22) Anmeldetag: 02.01.2019
(51) Int. Cl.: G01F 1/66

(54) **MESSROHR UND ULTRASCHALL-DURCHFLUSSMENGENMESSER**

(71) Anmelder: Engelmann Sensor GmbH, 69168 Wiesloch-Baiertal (DE)
(72) Erfinder: Reiß, Holger, 76764 Rheinzabern (DE); Sturek, Robert, 69242 Mühlhausen (DE); Niedermayer, Manuel, 69231 Rauenberg (DE); Albert, Jonas Marian, 74918 Angelbachtal (DE)
(74) Vertreter: Durm Patentanwälte PartG mbB

(57) **Zusammenfassung**

Die vorliegende Erfindung betrifft ein Messrohr (14) aus ultraschallabsorbierendem Kunststoff für einen Ultraschall-Durchflussmengenmesser (10) zum Bestimmen einer Menge einer durchfließenden Flüssigkeit, mit: einer ersten Öffnung (22a) im Messrohr zum Einleiten eines Ultraschallsignals (24) in die durchfließende Flüssigkeit und einer zweiten Öffnung (22b) im Messrohr zum Ausleiten des Ultraschallsignals aus der durchfließenden Flüssigkeit, die mit Abstand hintereinander entlang des Messrohrs angeordnet sind; einem Messkanal (26) innerhalb des Messrohrs, der sich zwischen den zwei Öffnungen erstreckt und von der durchfließenden Flüssigkeit durchflossen wird; und mindestens zwei Umlenkbereichen (18a, 18b, 18c) zum Aufnehmen von jeweils einem Umlenkspiegel (16a, 16b, 16c), um das Ultraschallsignal durch Reflexion von der ersten Öffnung durch den Messkanal zu der zweiten Öffnung weiterzuleiten, wobei der Messkanal in einem Querschnitt senkrecht zur Flussrichtung der durchfließenden Flüssigkeit rechteckig ausgebildet ist und eine sich in Flussrichtung der Flüssigkeit vergrößernde Querschnittsfläche aufweist. Die vorliegende Erfindung betriff weiterhin einen Ultraschall-Durchflussmengenmesser (10) zum Bestimmen einer Menge einer durchfließenden Flüssigkeit sowie ein Verfahren zum Herstellen eines Messrohrs (14).

## Beschreibung

Die vorliegende Erfindung betrifft einen Ultraschall-Durchflussmengenmesser zum Bestimmen einer Menge einer durchfließenden Flüssigkeit, ein Messrohr aus ultraschallabsorbierendem Kunststoff für einen solchen Ultraschall-Durchflussmengenmesser sowie ein Verfahren zum Herstellen des Messrohrs.

Solche Durchflussmengenmesser werden beispielsweise in Wärmezählern zur Bestimmung des Verbrauchs von Wärme in Heizungsanlagen verwendet. Dazu wird das Volumen des warmen Wassers, das durch den Messkanal strömt, gemessen. Gleichzeitig wird die Temperaturdifferenz zwischen zwei Messpunkten im Vor- und Rücklauf gemessen. Aus diesen beiden Messungen kann dann der Wärmezähler die verbrauchte Wärmemenge ermitteln.

Die vorliegende Erfindung betrifft insbesondere Ultraschall-Durchflussmengenmesser mit zwei Ultraschallwandlern, die ein Ultraschallsignal in ein Messrohr aus ultraschallabsorbierendem Kunststoff einleiten. Innerhalb des Messrohrs ist ein Messkanal angeordnet, der von der Flüssigkeit durchflossen wird. Weiterhin sind innerhalb des Messrohrs mindestens zwei Umlenkspiegel so angeordnet, dass das Ultraschallsignal von einem Ultraschallwandler zum anderen weitergeleitet wird. Dabei wird das Ultraschallsignal zumindest teilweise in bzw. gegen die Flussrichtung durch den Messkanal und die durchfließende Flüssigkeit geleitet. Basierend auf dem empfangenen Ultraschallsignal kann dann die Durchflussmenge ermittelt werden.

Üblicherweise sind die Rohrleitungssysteme, in denen ein Ultraschall-Durchflussmengenmesser zum Einsatz kommt, aus Metall. Metallische Gehäuse haben die Eigenschaft, Ultraschallsignale zu reflektieren und damit einer präzisen Messung abträglich zu sein. Kunststoff hat im Gegensatz dazu die Eigenschaft, Ultraschallwellen kaum zu reflektieren, stattdessen aufzunehmen und gut zu absorbieren. Durch die Verwendung eines Messrohrs aus ultraschallabsorbierendem Kunststoff werden unerwünschte Reflexionen an den Wänden des Ultraschall-Durchflussmengenmessers und eine unkontrollierte Ausbreitung eingekoppelter Schwingungen als Körperschall minimiert. Ein solches Messrohr kann beispielsweise innerhalb eines Metallgehäuses verwendet werden. Die Genauigkeit der Ultraschall-Messung wird verbessert.

Ein Ultraschall-Durchflussmengenmesser ist beispielsweise aus der EP 3 199 923 A1 bekannt. Darin wird ein Durchflussmengenmesser mit einem metallischen Gehäuse offenbart, in das ein Kunststoffformteil eingesetzt ist, welches einen Messkanal bildet. Entlang des Messkanals sind zwei Ultraschallwandler im Abstand angeordnet. An der Innenwandung des Kunststoffformteils sitzen drei Umlenkspiegel, welche die Ultraschallsignale auf einem W-förmigen Weg zwischen den beiden Ultraschallwandlern mehrfach reflektieren. Die Umlenkspiegel sitzen auf flachen Sockeln, die an der Innenwandung angeordnet und strömungsgünstig ausgebildet sind. Außerhalb der Umlenkspiegel absorbiert das Kunststoffformteil die Ultraschallstrahlung, sodass störende Reflexionen und ein Einkoppeln in das metallische Gehäuse vermieden werden.

Bei bisherigen Ansätzen zur Ausgestaltung des Messrohrs aus ultraschallabsorbierendem Kunststoff war die Überlegung, über eine geschickte Anordnung der Umlenkspiegel und über eine möglichst ungestörte Strömung in einem Messkanal innerhalb des Messrohrs eine genaue Messung sicherzustellen. Dennoch beeinflussen die Umlenkspiegel die Strömung im Messrohr und können damit die Genauigkeit der Durchflussmengenmessung beeinträchtigen.

Ausgehend hiervon stellt sich der vorliegenden Erfindung die Aufgabe, eine möglichst exakte Messung einer Menge einer durchfließenden Flüssigkeit zu ermöglichen. Insbesondere soll innerhalb eines Messkanals in einem Messrohr eine möglichst homogene Strömung der durchfließenden Flüssigkeit erreicht werden, um eine präzise Messung mittels des Ultraschallsignals zu ermöglichen.

Zum Lösen dieser Aufgabe betrifft die vorliegende Erfindung in einem ersten Aspekt ein Messrohr aus ultraschallabsorbierendem Kunststoff für einen Ultraschall-Durchflussmengenmesser zum Bestimmen einer Menge einer durchfließenden Flüssigkeit, mit:
- einer ersten Öffnung im Messrohr zum Einleiten eines Ultraschallsignals in die durchfließende Flüssigkeit und einer zweiten Öffnung im Messrohr zum Ausleiten des Ultraschallsignals aus der durchfließenden Flüssigkeit, die mit Abstand hintereinander entlang des Messrohrs angeordnet sind;
- einem Messkanal innerhalb des Messrohrs, der sich zwischen den zwei Öffnungen erstreckt und von der durchfließenden Flüssigkeit durchflossen wird; und
- mindestens zwei Umlenkbereichen zum Aufnehmen von jeweils einem Umlenkspiegel, um das Ultraschallsignal durch Reflexion von der ersten Öffnung durch den Messkanal zu der zweiten Öffnung weiterzuleiten, wobei
- der Messkanal in einem Querschnitt senkrecht zur Flussrichtung der durchfließenden Flüssigkeit rechteckig ausgebildet ist und eine sich in Flussrichtung der Flüssigkeit vergrößernde Querschnittsfläche aufweist.

In einem weiteren Aspekt betrifft die Erfindung einen Ultraschall-Durchflussmengenmesser zum Bestimmen einer Menge einer durchfließenden Flüssigkeit, mit:
- einem Messrohr wie zuvor beschrieben;
- jeweils einem Umlenkspiegel in den Umlenkbereichen;
- einem ersten Ultraschallwandler, der zum Senden und Empfangen des Ultraschallsignals an die erste Öffnung im Messrohr angekoppelt ist;
- einem zweiten Ultraschallwandler, der zum Empfangen und Senden des Ultraschallsignals an die zweite Öffnung im Messrohr angekoppelt ist; und
- einem Anschluss zum Verbinden der Ultraschallwandler mit einem Prozessor zum Ansteuern der Ultraschallwandler, um basierend auf einer Auswertung des Ultraschallsignals nach Durchlaufen der durchfließenden Flüssigkeit eine Durchflussmenge zu ermitteln.

In einem weiteren Aspekt betrifft die Erfindung ein Verfahren zum Herstellen eines Messrohrs wie zuvor beschrieben, wobei die Umlenkspiegel in einem Spritzgussprozess in das Messrohr miteingespritzt werden.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Messrohr und der Ultraschall-Durchflussmengenmesser sowie das Herstellungsverfahren entsprechend der für das Messrohr und den Ultraschall-Durchflussmengenmesser in den abhängigen Ansprüchen beschriebenen Ausgestaltungen ausgeführt sein.

Erfindungsgemäß wird ein Messrohr bereitgestellt, das sich zum Verwenden in einem Ultraschall-Durchflussmengenmesser eignet. Das Messrohr und der Messkanal im Messrohr werden von einer Flüssigkeit durchflossen, insbesondere von Wasser. Mittels eines Ultraschallwandlers wird ein Ultraschallsignal generiert und in die durchfließende Flüssigkeit eingeleitet. Nachdem das Ultraschallsignal durch den Messkanal und durch die innerhalb des Messkanals befindliche durchfließende Flüssigkeit geleitet wurde, wird es vom zweiten Ultraschallwandler empfangen. Ausgehend von einer Auswertung des empfangenen Ultraschallsignals kann basierend auf der Beeinflussung des Ultraschallsignals durch die Fließgeschwindigkeit der durchfließenden Flüssigkeit auf die Durchflussmenge rückgeschlossen werden. Hierzu wird üblicherweise die durchfließende Flüssigkeit mindestens jeweils einmal in und gegen die Flussrichtung durchlaufen. Beide Ultraschallwandler sind insoweit zumeist zum Senden und Empfangen des Ultraschallsignals ausgebildet.

Erfindungsgemäß ist es vorgesehen, dass der Messkanal rechteckig ausgebildet ist und eine sich in Flussrichtung der Flüssigkeit vergrößernde Querschnittsfläche aufweist. Es hat sich gezeigt, dass eine Verwendung eines Messkanals mit einem sich in Flussrichtung vergrößernden Querschnitt eine erhöhte Messgenauigkeit bewirkt. Durch die Vergrößerung des Querschnitts innerhalb des Messkanals wird eine Verlangsamung der Fließgeschwindigkeit beim Durchströmen des Messkanals erreicht. Hierdurch erhöht sich eine Homogenität der Strömung über den Querschnitt. Verwirbelungen werden reduziert. Durch einen rechteckigen Querschnitt im Bereich des Messkanals kann eine effiziente Fertigbarkeit erreicht werden. Zudem wird eine homogene Strömung im Messkanal gewährleistet. Im Vergleich zu bisherigen Ansätzen mit konstantem Querschnitt des Messkanals kann eine Durchflussmenge mit höherer Präzision ermittelt werden.

In einer bevorzugten Ausgestaltung ist eine Zentralachse des Messkanals entlang der Flussrichtung der durchfließenden Flüssigkeit nicht deckungsgleich mit einer Zentralachse des Messrohrs entlang der Flussrichtung der durchfließenden Flüssigkeit. Die Zentralachse des Messkanals verläuft durch die Diagonalenschnittpunkte der rechteckigen Querschnittsfläche des Messkanals. Die Zentralachse des Messrohrs ergibt sich als Zentralachse einer das Messrohr umschließenden Form. Insbesondere kann das Messrohr im Wesentlichen zylinderförmig sein. Die Zentralachse ergibt sich dann als Zentralachse des Zylinders. Beide Zentralachsen sind vorzugsweise nicht deckungsgleich. Der Messkanal ist exzentrisch in Bezug zum Messrohr angeordnet. Hierdurch wird eine homogene strömungstechnische Beeinflussung des Ultraschallsignals erreicht. Die Genauigkeit der Messung der Durchflussmenge kann weiter gesteigert werden.

In einer bevorzugten Ausgestaltung verlaufen die Zentralachse des Messkanals und die Zentralachse des Messrohrs nicht parallel. Der Messkanal weitet sich in anderen Worten auf, wobei jedoch die Aufweitung der Querschnittsfläche des Messkanals nicht in senkrechter und waagerechter Richtung gleichmäßig erfolgt. Es ergibt sich sozusagen ein konischer Messkanal. Der Messkanal weitet sich ungleichmäßig auf, was eine Zentralachse des Messkanals bedingt, die nicht parallel zu der Zentralachse des Messrohrs verläuft. Die Messgenauigkeit wird durch die weitere Vermeidung von Verwirbelungen gesteigert.

In einer vorteilhaften Ausgestaltung verlaufen mindestens zwei, vorzugsweise drei, Innenflächen des Messkanals parallel zu einer Zentralachse des Messrohrs. Eine Innenfläche des Messkanals ist dabei eine Fläche, die mit der durchfließenden Flüssigkeit in Kontakt steht. Der Messkanal hat im Wesentlichen vier Innenflächen, wobei es möglich ist, dass eine Innenfläche zumindest teilweise von einem Umlenkspiegel innerhalb des Messkanals gebildet wird. Mindestens zwei, bevorzugt drei, Innenflächen dieses Messkanals verlaufen parallel zu einer Zentralachse des Messrohrs. Dies hat zur Folge, dass höchstens zwei, mindestens eine, Innenflächen nicht parallel zur Zentralachse des Messrohrs verlaufen, sondern sich in Richtung der durchfließenden Flüssigkeit von der Zentralachse des Messrohrs entfernen. Der Messkanal weitet sich auf. Verwirbelungen werden vermieden. Die Genauigkeit bei der Messung wird gesteigert.

In einer vorteilhaften Ausgestaltung umfasst das Messrohr ein Oberteil und ein mit dem Oberteil koppelbares Unterteil. Der Messkanal wird von Ober- und Unterteil begrenzt. Vorzugsweise weist der Messkanal im Querschnitt senkrecht zur Flussrichtung der durchfließenden Flüssigkeit einen ersten U-förmigen Abschnitt im Oberteil und einen zweiten U-förmigen Abschnitt im Unterteil auf. Der Messkanal verläuft teilweise im Ober- und teilweise im Unterteil. Die beiden U-förmigen Abschnitte ergeben zusammen den Messkanal mit rechteckigem Querschnitt. Ober- und Unterteil werden auch als Ober- und Unterschale bezeichnet. Das Messrohr ist sozusagen zusammensetzbar. Durch die Zusammensetzbarkeit wird eine einfachere Herstellbarkeit erreicht. Beide Teile können beispielsweise im Spritzgussverfahren hergestellt werden. Zudem kann eine einfache und effiziente Montage der Umlenkspiegel in die Umlenkbereiche erfolgen.

In einer vorteilhaften Ausgestaltung ist zwischen Ober- und Unterteil im Bereich des Messkanals zum Abdichten auf beiden Seiten des Messkanals eine Labyrinth-Verbindung angeordnet. Die Labyrinth-Verbindung umfasst eine Nut an dem einen Teil des Ober- und Unterteils und einen in die Nut eingreifenden Vorsprung an dem anderen Teil des Ober- und Unterteils. Eine Labyrinth-Verbindung bezeichnet eine Verbindung, bei der ein Vorsprung, also ein Überstand, in eine Nut, also eine Art Kanal, eingreift. Der Verlauf der Labyrinth-Verbindung ist dabei nicht geradlinig, sondern weist mindestens eine Richtungsänderung auf. Durch die Labyrinth-Verbindung wird eine Abdichtung zwischen Ober- und Unterteil sichergestellt. Es wird verhindert, dass Flüssigkeit aus dem Messkanal ausströmt. Hierdurch werden Strömungen durch ausströmende Flüssigkeit innerhalb des Messkanals vermieden, die die Homogenität der Strömung innerhalb des Messkanals beeinträchtigen könnten. Die Genauigkeit bei der Messung der Durchflussmenge kann weiter verbessert werden.

In einer vorteilhaften Ausgestaltung erstreckt sich dabei der Vorsprung zumindest auf der einen Seite des Messkanals über die gesamte Länge des Messrohrs. Zusätzlich oder alternativ erstreckt sich die Nut im Wesentlichen entlang des Messkanals. Durch die Verwendung eines relativ langen Vorsprungs kann über die gesamte Länge eine Abdichtung erreicht werden. Ausfließende und eindringende Flüssigkeit wird vermieden. Wie zuvor beschrieben ergibt sich hieraus eine verbesserte Messgenauigkeit.

Vorzugsweise umfasst das Messrohr drei Umlenkbereiche. Zwei Öffnungs-Umlenkbereiche sind im Messrohr gegenüberliegend von den beiden Öffnungen angeordnet. Ein Innenflächen-Umlenkbereich ist an einer Innenfläche des Messkanals angeordnet. Die Öffnungs-Umlenkbereiche und der Innenflächen-Umlenkbereich sind so angeordnet, dass das Ultraschallsignal nach dem Einleiten in die durchfließende Flüssigkeit auf einen ersten Umlenkspiegel in einem der beiden Öffnungs-Umlenkbereiche auftrifft, von diesem ersten Umlenkspiegel auf einen dritten Umlenkspiegel in dem Innenflächen-Umlenkbereich reflektiert wird, von diesem dritten Umlenkspiegel auf einen zweiten Umlenkspiegel im anderen Öffnungs-Umlenkbereich reflektiert wird und von diesem zweiten Umlenkspiegel ausgeleitet wird. In anderen Worten ergibt sich ein W- bzw. M-förmiger Weg des Ultraschallsignals. Durch die Kombination des W- oder M-förmigen Wegs des Ultraschallsignals (Messstrecke) durch den Messkanal mit dem sich in Flussrichtung der Flüssigkeit vergrößernden Querschnitt des Messkanals können Totwasserbereiche im Umfeld der Umlenkspiegel weitestgehend vermieden werden. Im Auslassbereich kann die Überhöhung am hinteren Spiegel vergrößert werden, um den Einfluss eines sich daran ablösenden Wirbels möglichst gering zu halten. Eine homogene Strömung im Messkanal wird erreicht, wodurch sich eine verbesserte Messgenauigkeit ergibt.

Vorzugsweise sind die Umlenkbereiche zum Aufnehmen von Metallplättchen als Umlenkspiegel ausgebildet. Die Metallplättchen können eingelegt werden oder auch, bevorzugt, in einem Spritzgussprozess in das Messrohr miteingespritzt werden. Hierdurch ergibt sich eine effiziente Herstellbarkeit und eine zuverlässige Reflexion des Ultraschallsignals innerhalb des Messrohrs.

In einer vorteilhaften Ausgestaltung umfasst das Messrohr eine umlaufende Vertiefung im Umfang zum Aufnehmen eines Dichtelements, um einen Zwischenraum zwischen Messrohr und Ultraschall-Durchflussmengenmesser abzudichten und einen Flüssigkeitsfluss außerhalb des Messrohrs zu unterbinden. Hierdurch kann die Homogenität der Strömung bereits beim Ein- und Ausfließen in das Messrohr weiter verbessert werden. Die Genauigkeit der Messung kann weiter gesteigert werden.

In einer bevorzugten Ausgestaltung umfasst der Ultraschall-Durchflussmengenmesser ein Metallgehäuse zum Einkoppeln in ein Rohrleitungssystem. Das Messrohr ist innerhalb des Metallgehäuses form- und/oder kraftschlüssig befestigt, vorzugsweise mit einer Schraube. In vielen Anwendungen werden Metallrohre verwendet. Metallrohre reflektieren Ultraschall, sodass eine zuverlässige Messung schwierig ist. Durch die Verwendung eines Messrohrs aus ultraschallabsorbierendem Kunststoff kann innerhalb eines Metallrohrs eine zuverlässige Messung erreicht werden. Durch eine form- und/oder kraftschlüssige Befestigung innerhalb des Metallgehäuses kann ein Verrutschen oder Lösen des Messrohrs vermieden werden. Zudem kann eine Umströmung weitestgehend vermieden werden, um eine Messung mit hoher Genauigkeit zu erlauben.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Schnittdarstellung eines erfindungsgemäßen Ultraschall-Durchflussmengenmessers zum Bestimmen einer Menge einer durchfließenden Flüssigkeit;
- Figur 2: eine perspektivische Darstellung eines erfindungsgemäßen Messrohrs mit Ober- und Unterteil;
- Figur 3a: eine schematische Schnittdarstellung des Messrohrs parallel zu einer Zentralachse des Messrohrs; und
- Figur 3b: eine schematische Schnittdarstellung des Messrohrs senkrecht zur Zentralachse des Messrohrs.

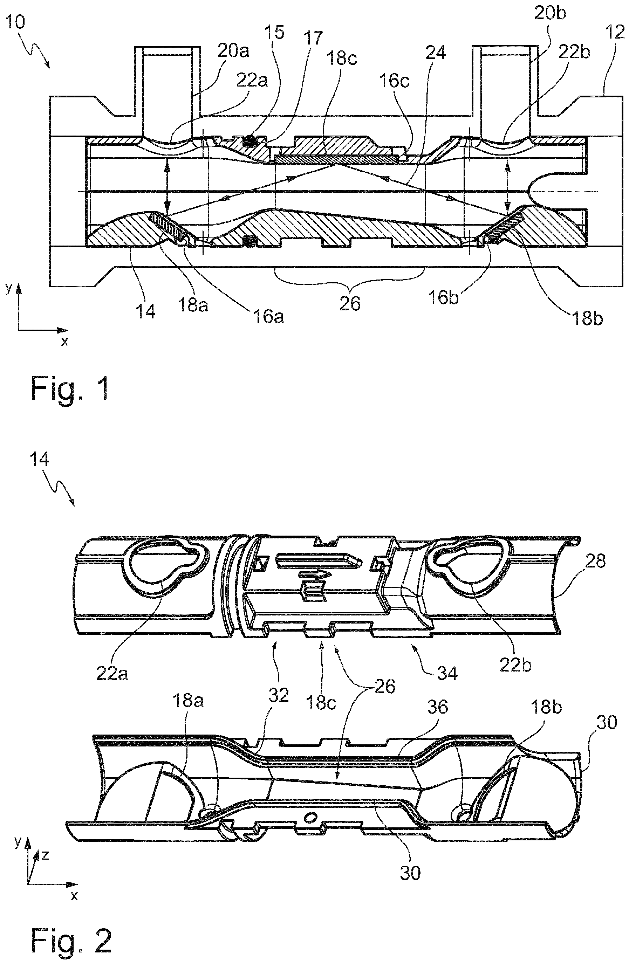

In der Fig. 1 ist schematisch ein erfindungsgemäßer Ultraschall-Durchflussmengenmesser 10 zum Bestimmen einer Menge einer durchfließenden Flüssigkeit in einem Längsschnitt dargestellt. Der Ultraschall-Durchflussmengenmesser wird in der Darstellung in Richtung der x-Achse von links nach rechts von Flüssigkeit durchflossen. Der Ultraschall-Durchflussmengenmesser 10 eignet sich beispielsweise für die Wärmemengenmessung in Heizungsanlagen von Gebäuden und umfasst ein Metallgehäuse 12 zum Einkoppeln in ein Rohrleitungssystem (nicht dargestellt). Das Metallgehäuse 12 hat im dargestellten Ausführungsbeispiel einen im Wesentlichen runden Querschnitt und besitzt an seinen beiden Enden jeweils einen Flansch zum Anschluss an ein Rohrleitungsnetz. Beispielsweise kann das Metallgehäuse 12 aus Messing bestehen. Innerhalb des Metallgehäuses 12 befindet sich ein Messrohr 14 aus ultraschallabsorbierendem Kunststoff, das von der Flüssigkeit durchflossen wird. Zwischen Messrohr 14 und Metallgehäuse 12 ist ein Dichtelement 15 (Dichtring) in einer umlaufenden Vertiefung 17 um das Messrohr 14 angeordnet, um eine Strömung zwischen Metallgehäuse 12 und Messrohr 14 zu verhindern.

Weiterhin umfasst der Ultraschall-Durchflussmengenmesser 10 insgesamt drei Umlenkspiegel 16a, 16b, 16c, die in zwei Öffnungs-Umlenkbereichen 18a, 18b und einem Innenflächen-Umlenkbereich 18c des Messrohrs 14 angeordnet sind. Die drei Umlenkspiegel 16a, 16b, 16c können beispielsweise flache ebene Metallplättchen sein, deren Oberflächen poliert sind und die Spiegelflächen bilden. Die Metallplättchen werden die in die Umlenkbereiche eingelegt und beispielsweise festgeklebt. Vorteilhafterweise ist es möglich, dass die Umlenkspiegel 16a, 16b, 16c in einem Spritzgussprozess in das Messrohr 14 mit eingespritzt werden. Hierdurch kann eine effiziente Herstellbarkeit erreicht werden. Es kann aber auch ein anderes ultraschallreflektierendes Material verwendet werden und/oder eine Schicht aus ultraschallreflektierendem Metall aufgedampft werden.

Zudem umfasst der Ultraschall-Durchflussmengenmesser 10 einen ersten Ultraschallwandler 20a und einen zweiten Ultraschallwandler 20b, die zum Senden und Empfangen eines Ultraschallsignals ausgebildet sind. Die Ultraschallwandler 20a, 20b sind mit einem Prozessor (nicht dargestellt) verbunden, über den sie angesteuert werden, um ein Ultraschallsignal 24 zu senden bzw. zu empfangen. Eine Bestimmung der Durchflussmenge kann basierend auf einer Auswertung des Ultraschallsignals 24 erfolgen, nachdem dieses Ultraschallsignal 24 einen innerhalb des Messrohrs 14 angeordneten Messkanal 26 durchlaufen hat. Die Genauigkeit der Messung der Durchflussmenge der durchfließenden Flüssigkeit hängt von einer Homogenität der Strömung innerhalb des Messkanals 26 ab.

Die Ultraschallwandler 20a, 20b sind an eine erste Öffnung 22a und eine zweite Öffnung 22b im Messrohr 14 angekoppelt. Im dargestellten Ausführungsbeispiel ist die erste Öffnung 22a bzw. der erste Ultraschallwandler 20a gegenüber dem ersten Öffnungs-Umlenkbereich 18a bzw. gegenüber dem ersten Umlenkspiegel 16a angeordnet. Die zweite Öffnung 22b bzw. der zweite Ultraschallwandler 20b ist gegenüber dem zweiten Öffnungs-Umlenkbereich 18b bzw. gegenüber dem zweiten Umlenkspiegel 16b angeordnet.

Ein durch eine der beiden Öffnungen 22a, 22b in das Messrohr 14 eingekoppeltes Ultraschallsignal 24 trifft auf einen der beiden Umlenkspiegel 16a, 16b in den Öffnungs-Umlenkbereichen 18a, 18b auf. Von dort wird es auf den dritten innerhalb des Messkanals 26 angeordneten Umlenkspiegel 16c im Innenflächen-Umlenkbereich 18c reflektiert. Von diesem wird es dann erneut an den anderen der beiden Umlenkspiegel 16a, 16b in den Öffnungs-Umlenkbereichen 18a, 18b reflektiert und durch die andere der beiden Öffnungen 22a, 22b ausgeleitet. Das Ultraschallsignal 24 kann dann von einem der beiden Ultraschallwandler 20a, 20b empfangen werden. Das Ultraschallsignal 24 legt zwischen den Ultraschallwandlern 20a, 20b damit einen im Prinzip W-förmigen Weg zurück.

Wie dargestellt wird der Messkanal zumeist mindestens jeweils einmal in und entgegen der Fließrichtung der Flüssigkeit durchlaufen. Das Ultraschallsignal 24 verläuft in beide Richtungen. Einerseits kann der erste Ultraschallwandler 20a das Ultraschallsignal 24 aussenden und der zweite Ultraschallwandler 20b das Ultraschallsignal empfangen. Andererseits ist es möglich, dass der zweite Ultraschallwandler 20b das Ultraschallsignal 24 aussendet und der erste Ultraschallwandler 20a das Ultraschallsignal empfängt.

In der Fig. 2 ist schematisch ein erfindungsgemäßes Messrohr 14 in perspektivischer Ansicht dargestellt. Das Messrohr 14 umfasst ein Oberteil 28 sowie ein mit dem Oberteil koppelbares Unterteil 30. Die erste Öffnung 22a und die zweite Öffnung 22b sind am Oberteil angeordnet und im Wesentlichen schlüssellochförmig ausgebildet.

Der erste Öffnungs-Umlenkbereich 18a und der zweite Öffnungs-Umlenkbereich 18b sind im Unterteil 30 angeordnet. Der Innenflächen-Umlenkbereich 18c ist im Oberteil 28 angeordnet und in der perspektivischen Darstellung nicht sichtbar. Die Öffnungs-Umlenkbereiche 18a, 18b sind gegenüber den Öffnungen 22a, 22b angeordnet.

Im mittleren Bereich des Messrohrs 14 ist der Messkanal 26 angeordnet. Der Messkanal 26 hat einen Querschnitt, der senkrecht zur Flussrichtung (von links nach rechts in der Darstellung) der durchfließenden Flüssigkeit rechteckig ausgebildet ist. Im dargestellten Ausführungsbeispiel ist der Messkanal teilweise im Oberteil 28 und teilweise im Unterteil 30 angeordnet. Insbesondere ist sowohl im Oberteil 28 als auch im Unterteil 30 jeweils ein U-förmiger Abschnitt des Messkanals 26 angeordnet. Unter einem U-förmigen Abschnitt versteht sich ein Abschnitt mit rechteckigem Querschnitt, der einseitig in Richtung des jeweils anderen U-förmigen Abschnitts geöffnet ist. In anderen Worten verläuft ein Teil des Messkanals im Oberteil 28 und ein anderer Teil im Unterteil 30.

Für die Abdichtung zwischen Oberteil 28 und Unterteil 30 ist eine Labyrinth-Verbindung 32 vorgesehen. Die Labyrinth-Verbindung 32 umfasst dabei eine Nut 34 am Oberteil und einen in die Nut eingreifenden Vorsprung 36 am Unterteil 30. Sowohl die Nut 34 als auch der Vorsprung 36 sind symmetrisch auf beiden Seiten des Messkanals 26 angeordnet. Der Vorsprung 36 verläuft im dargestellten Beispiel auf beiden Seiten des Messkanals 26 über die gesamte Länge des Messrohrs 14. Die Nut 34 verläuft im dargestellten Ausführungsbeispiel im Wesentlichen entlang des Messkanals 26. Demnach verläuft die Nut 34 nicht über die gesamte Länge des Messrohrs 14, sondern lediglich über einen Teil davon, nämlich den Teil entlang des Messkanals 26. Durch die Labyrinth-Verbindung 32 wird sichergestellt, dass insbesondere im Bereich des Messkanals 26 eine möglichst dichte Verbindung zwischen Oberteil 28 und Unterteil 30 hergestellt wird. Es wird verhindert, dass Flüssigkeit ein- oder austritt und hierdurch Verwirbelungen bzw. eine inhomogene Strömung im Bereich des Messkanals 26 entsteht. Insoweit bewirkt die Labyrinth-Verbindung 32 eine Verbesserung der Homogenität der Strömung im Bereich des Messkanals 26.

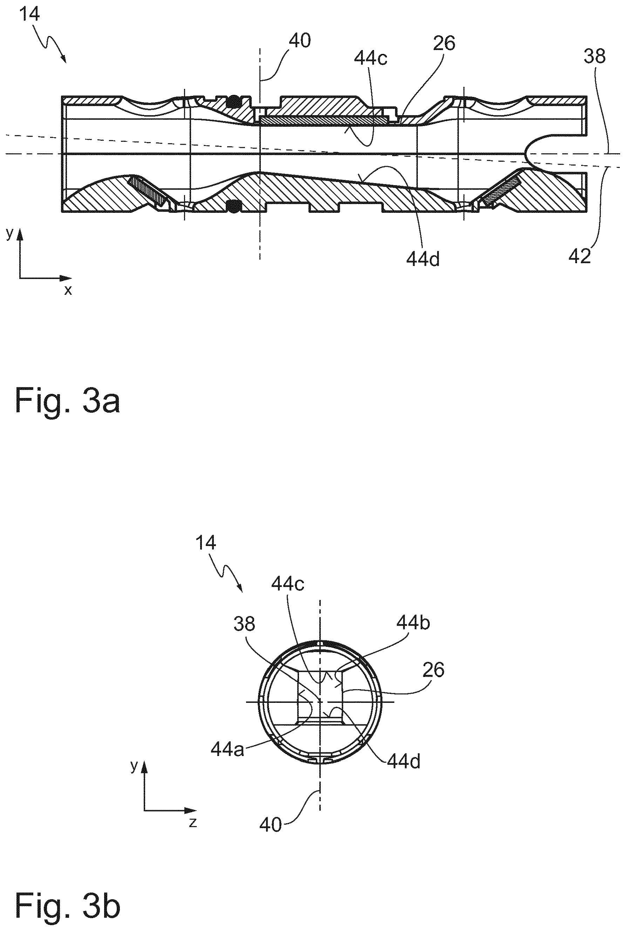

In den Fig. 3a und 3b sind schematische Schnittansichten des Messrohrs 14 gezeigt. Fig. 3a zeigt eine seitliche Schnittansicht, wobei eine Zentralachse 38 des Messrohrs 14 entlang der x-Achse von links nach rechts in Flussrichtung der durchfließenden Flüssigkeit verläuft. Fig. 3b zeigt eine Schnittansicht orthogonal zur Zentralachse 38 des Messrohrs 14 im Bereich des Messkanals 26 (Querschnitt). Die Schnittebene 40 verläuft dabei im Bereich des Flüssigkeitseintritts in den Messkanal 26.

Der Messkanal 26 ist im Bereich der Schnittebene 40 dabei exzentrisch zum Messrohr 14 angeordnet. In anderen Worten ist der Messkanal 26 im Bereich seines Eintritts in der Schnittebene 40 nach oben versetzt im Messrohr 14 angeordnet. Der Messkanal 26 weist einen rechteckigen Querschnitt auf. Die Querschnittsfläche vergrößert sich in Durchflussrichtung. Im dargestellten Beispiel verlaufen dabei die Zentralachse 38 des Messrohrs 14 und eine Zentralachse 42 des Messkanals 26 nicht parallel. Die Zentralachse 42 des Messkanals 26 ist dabei als diejenige Achse zu verstehen, die in der Mitte des Messkanals 26 verläuft. Im Querschnitt wird als Mitte dabei der Schnittpunkt der Diagonalen des Querschnittsrechtecks verstanden.

Im dargestellten Beispiel verlaufen drei Innenflächen des Messkanals 44a, 44b, 44c parallel zur Zentralachse 38 des Messrohrs 14. Eine weitere Innenfläche 44d verläuft nicht parallel zur Zentralachse 38 des Messrohrs, sondern fällt in Flussrichtung der durchfließenden Flüssigkeit ab. Hierdurch ergibt sich die Erweiterung des Querschnitts des Messkanals 26 in Flussrichtung der Flüssigkeit. Durch die sich vergrößernde Querschnittsfläche ergibt sich innerhalb des Messkanals 26 eine homogene Strömung, die eine präzise Messung der Durchflussmenge erlaubt.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Messrohr (14) aus ultraschallabsorbierendem Kunststoff für einen Ultraschall-Durchflussmengenmesser (10) zum Bestimmen einer Menge einer durchfließenden Flüssigkeit, mit:
einer ersten Öffnung (22a) im Messrohr zum Einleiten eines Ultraschallsignals (24) in die durchfließende Flüssigkeit und einer zweiten Öffnung (22b) im Messrohr zum Ausleiten des Ultraschallsignals aus der durchfließenden Flüssigkeit, die mit Abstand hintereinander entlang des Messrohrs angeordnet sind;
einem Messkanal (26) innerhalb des Messrohrs, der sich zwischen den zwei Öffnungen erstreckt und von der durchfließenden Flüssigkeit durchflossen wird; und
mindestens zwei Umlenkbereichen (18a, 18b, 18c) zum Aufnehmen von jeweils einem Umlenkspiegel (16a, 16b, 16c), um das Ultraschallsignal durch Reflexion von der ersten Öffnung durch den Messkanal zu der zweiten Öffnung weiterzuleiten, wobei
der Messkanal in einem Querschnitt senkrecht zur Flussrichtung der durchfließenden Flüssigkeit rechteckig ausgebildet ist und eine sich in Flussrichtung der Flüssigkeit vergrößernde Querschnittsfläche aufweist.

2. Messrohr (14) nach Anspruch 1, wobei
eine Zentralachse (42) des Messkanals (26) entlang der Flussrichtung der durchfließenden Flüssigkeit nicht deckungsgleich mit einer Zentralachse (38) des Messrohrs entlang der Flussrichtung der durchfließenden Flüssigkeit ist.

3. Messrohr (14) nach Anspruch 2, wobei die Zentralachse (42) des Messkanals (26) und die Zentralachse (38) des Messrohrs nicht parallel verlaufen.

4. Messrohr (14) nach einem der vorstehenden Ansprüche, wobei mindestens zwei, vorzugsweise drei, Innenflächen (44a, 44b, 44c) des Messkanals (26) parallel zu einer Zentralachse (38) des Messrohrs verlaufen.

5. Messrohr (14) nach einem der vorstehenden Ansprüche, wobei
das Messrohr ein Oberteil (28) und ein mit dem Oberteil koppelbares Unterteil (30) umfasst;
der Messkanal (26) von Ober- und Unterteil begrenzt wird; und
der Messkanal vorzugsweise im Querschnitt senkrecht zur Flussrichtung der durchfließenden Flüssigkeit einen ersten U-förmigen Abschnitt im Oberteil und einen zweiten U-förmigen Abschnitt im Unterteil aufweist.

6. Messrohr (14) nach Anspruch 5, wobei
zwischen Oberteil (28) und Unterteil (30) im Bereich des Messkanals (26) zum Abdichten auf beiden Seiten des Messkanals eine Labyrinth-Verbindung (32) angeordnet ist; und
die Labyrinth-Verbindung eine Nut (34) an dem einen Teil des Ober- und Unterteils und einen in die Nut eingreifenden Vorsprung (36) an dem anderen Teil des Ober- und Unterteils umfasst.

7. Messrohr (14) nach Anspruch 6, wobei
sich der Vorsprung (36) zumindest auf der einen Seite des Messkanals (26) über die gesamte Länge des Messrohrs erstreckt; und/oder sich die Nut (34) im Wesentlichen entlang des Messkanals erstreckt.

8. Messrohr (14) nach einem der vorstehenden Ansprüche, mit drei Umlenkbereichen (18a, 18b, 18c), wobei
zwei Öffnungs-Umlenkbereiche (18a, 18b) im Messrohr gegenüberliegend von den beiden Öffnungen (22a, 22b) angeordnet sind;
ein Innenflächen-Umlenkbereich (18c) an einer Innenfläche des Messkanals (26) angeordnet ist; und
die Öffnungs-Umlenkbereiche und der Innenflächen-Umlenkbereich so angeordnet ist, dass das Ultraschallsignal (24) nach dem Einleiten in die durchfließende Flüssigkeit auf einen ersten Umlenkspiegel (16a, 16b) in einem der beiden Öffnungs-Umlenkbereiche auftrifft, von diesem ersten Umlenkspiegel auf einen dritten Umlenkspiegel (16c) in dem Innenflächen-Umlenkbereich reflektiert wird, von diesem dritten Umlenkspiegel auf einen zweiten Umlenkspiegel im anderen Öffnungs-Umlenkbereich reflektiert wird und von diesem zweiten Umlenkspiegel ausgeleitet wird.

9. Messrohr (14) nach einem der vorstehenden Ansprüche, wobei die Umlenkbereiche (18a, 18b, 18c) zum Aufnehmen von Metallplättchen als Umlenkspiegel (16a, 16b, 16c) ausgebildet sind.

10. Messrohr (14) nach einem der vorstehenden Ansprüche mit einer umlaufenden Vertiefung (17) im Umfang zum Aufnehmen eines Dichtelements (15), um einen Zwischenraum zwischen Messrohr und Ultraschall-Durchflussmengenmesser (10) abzudichten und einen Flüssigkeitsfluss außerhalb des Messrohrs zu unterbinden.

11. Verfahren zum Herstellen eines Messrohrs (14) nach einem der vorstehenden Ansprüche, wobei die Umlenkspiegel (16a, 16b, 16c) in einem Spritzgussprozess in das Messrohr miteingespritzt werden.

12. Ultraschall-Durchflussmengenmesser (10) zum Bestimmen einer Menge einer durchfließenden Flüssigkeit, mit:
einem Messrohr (14) nach einem der Ansprüche 1 bis 10;
jeweils einem Umlenkspiegel (16a, 16b, 16c) in den Umlenkbereichen;
einem ersten Ultraschallwandler (20a), der zum Senden und Empfangen des Ultraschallsignals (24) an die erste Öffnung (22a) im Messrohr angekoppelt ist;
einem zweiten Ultraschallwandler (20b), der zum Empfangen und Senden des Ultraschallsignals an die zweite Öffnung (22b) im Messrohr angekoppelt ist; und
einem Anschluss zum Verbinden der Ultraschallwandler mit einem Prozessor zum Ansteuern der Ultraschallwandler, um basierend auf einer Auswertung des Ultraschallsignals nach Durchlaufen der durchfließenden Flüssigkeit eine Durchflussmenge zu ermitteln.

13. Ultraschall-Durchflussmengenmesser (10) mit einem Metallgehäuse (12) zum Einkoppeln in ein Rohrleitungssystem, wobei das Messrohr (14) im Metallgehäuse form- und/oder kraftschlüssig befestigt ist, vorzugsweise mit einer Schraube.
